# EUROPÄISCHE PATENTSCHRIFT

(11) **EP 1 781 428 B1**
(45) Veröffentlichungstag und Bekanntmachung des Hinweises auf die Patenterteilung: **10.09.2008**
(21) Anmeldenummer: 05774102.7
(22) Anmeldetag: 08.07.2005
(51) Int. Cl.: B21B 1/46, B21B 45/04

(54) **VERFAHREN UND VORRICHTUNG ZUM HERSTELLEN VON METALLBÄNDERN**
METHOD AND DEVICE FOR PRODUCING METAL STRIPS
PROCEDE ET DISPOSITIF POUR PRODUIRE DES BANDES DE METAL

(30) Priorität: 24.08.2004 DE 102004040927
(43) Veröffentlichungstag der Anmeldung: 09.05.2007
(73) Patentinhaber: SMS Demag Aktiengesellschaft, 40237 Düsseldorf (DE)
(72) Erfinder: RITTNER, Karl, 40723 Hilden (DE); ALTUNTOP, Sitki, 47269 Duisburg (DE); BENFER, Frank, 57334 Bad Laasphe (DE); LIPPOLD, Carsten, Qingdao, 266010 (CN)
(74) Vertreter: Klüppel, Walter
(86) Internationale Anmeldenummer: PCT/EP2005/007378
(87) Internationale Veröffentlichungsnummer: WO 2006/021263

(56) Entgegenhaltungen:
- EP-A- 0 625 383
- EP-A- 0 770 433
- EP-A- 0 795 361
- WO-A-03/064069
- PATENT ABSTRACTS OF JAPAN Bd. 015, Nr. 484 (C-0892), 9. Dezember 1991 (1991-12-09) -& JP 03 211233 A (NIPPON STEEL CORP), 17. September 1991 (1991-09-17)

## Beschreibung

Die Erfindung betrifft ein Verfahren zum Herstellen von Metallbändern in einer Vorrichtung, in der ein Metallstrang, insbesondere eine Dünnbramme, in einem Ofen auf eine gewünschte Temperatur gebracht und/oder auf einer gewünschten Temperatur gehalten und in Förderrichtung des Metallstranges hinter dem Ofen in einer Walzstraße einem Walzprozess unterzogen wird, wobei der Metallstrang während seines Aufenthalts im Ofen mindestens einer Entzunderungsoperation unterzogen wird. Des weiteren betrifft die Erfindung eine Vorrichtung zum Herstellen von Metallbändern.

Verfahren und Vorrichtungen dieser Gattung sind aus der JP 03 211233 A, aus der EP 0 625 383 A, aus der WO 03/064069 A, aus der EP 0 795 361 A und aus der EP 0 770 433 A bekannt. Dort sind Entzunderungsmittel im oder am Ofen vorgesehen, mit dem das zu verarbeitende Metallband entzundert werden kann.

Verfahren und Vorrichtungen einer ähnlichen Art sind im Stand der Technik auch aus anderen Dokumenten bekannt. Die EP 0 327 854 B1 offenbart ein Verfahren zum Walzen von auf einer Bandgießanlage gegossenen Vorbändern in einer Warmbreitbandfertigwalzstraße. Dabei wird das gegossene Vorband in einem kontinuierlichen Arbeitsgang auf Walztemperatur gebracht und zum Auswalzen in die Fertigstraße eingeführt. Zur Erweiterung des Produktionsprogramms der Anlage wird das Vorband in der Fertigwalzstraße alternativ zur Warmbandwalzung auf Grobblechdicke gewalzt, gekühlt und auf Grobblechlängen unterteilt und gestapelt.

Die DE 41 37 547 C2 zeigt einen Durchlaufofen zum Erwärmen von Dünnbrammen, der aus zwei parallelen Ofensektionen besteht. In diese laufen die Brammen beim Gießen auf mindestens zwei Gießsträngen nach ihrer Trennung vom Strang ein, wobei die Bewegungsachse eines Einlaufteils mit der Bewegungsachse der dem Durchlaufofen im technologischen Fluss nachfolgend angeordneten Walzstraße übereinstimmt. An diese Einlaufteile schließt sich mindestens eine quer zum technologischen Fluss der Brammen verfahrbare Ofensektion in Form einer Fähre an, um die Brammen erforderlichenfalls in die Bewegungsachse der Walzstraße zu verfahren. Eine ähnliche Lösung ist aus der DE 40 17 928 A1 bekannt, wo ebenfalls ein als Fähre ausgebildeter Ofenteil zum Einsatz kommt. Auch die DE 195 24 082 B4 zeigt eine Anlage zur Herstellung von warmgewalztem Stahlband in einer aus Brammenstranggießanlage, Querteilschere, Durchlaufofen und einer Warmfertigwalzstraße bestehenden Produktionslinie. Dabei besteht der Durchlaufofen aus einem ersten ortfesten Abschnitt und einem zweiten, eine Ofenfähre aufweisenden zweiten Abschnitt.

Die DE 100 04 117 A1 beschreibt eine Ofenanlage zum Erwärmen von stranggegossenen Brammen und zu deren Transport von einer Stranggießanlage zu einem Walzwerk. Dabei sind zwei Ofenlinien vorgesehen, die jeweils an einer Stranggießlinie angeschlossen sind und von denen eine an eine Walzlinie angeschlossen ist. Jede Ofenlinie enthält dabei eine Schwenkfähre, wobei die Schwenkfähren gegeneinander in eine Position schwenkbar sind, in der sie miteinander fluchten.

Das eingesetzte Material, d. h. der Metallstrang, durchläuft also bei allen vorbekannten Lösungen als Teil der Prozesslinie einen Wärmofen, dessen Aufgabe neben dem Transport des Materials vorrangig im Aufheizen, Homogenisieren und Temperaturhalten des Wärmgutes liegt.

Ein bei den vorstehend genannten Lösungen nicht thematisiertes Problem besteht darin, dass die Verzunderung des zu walzenden Guts nicht unerhebliche Probleme aufwirft: Die Transportvorrichtung für das Gut innerhalb des Wärmofens ist vorzugsweise durch Rollen oder Balken ausgeführt. Abhängig vom eingesetzten Wärmgut, von den Prozessbedingungen, von der Konstruktion und vom Material der Transportvorrichtung entstehen auf der Transportvorrichtung im Laufe der Zeit zunderbedingte Ablagerungen. Diese Ablagerungen bestehen überwiegend aus Komponenten des eingesetzten Wärmgutes. Sie beschädigen das Wärmgut und führen zu Fehlern auf dem Fertigprodukt.

Dies erkennt auch die EP 0 625 383 B1 und die EP 0 846 508 B1. Dort werden Fertigungslinien für Bänder bzw. Bleche beschrieben, die eine Anlage zum Stranggießen dünner oder mittlerer Brammen aufweisen. An diese schließen sich ein Ofen und eine nachgeordnete Walzstraße an. Um die Verzunderung des Metallstranges bzw. deren negative Auswirkungen auf die Folgeprozesse zu vermindern, ist vorgesehen, dass vor dem Ofen eine Entzundereinrichtung angeordnet wird. Der Metallstrang tritt also entzundert, d. h. gereinigt, in den Ofen ein, wodurch die Verunreinigung des Ofeninneren und insbesondere der Transportvorrichtung durch Zunder vermindert werden kann.

Nähere Untersuchungen haben gezeigt, dass diese Maßnahmen nicht geeignet sind, ein insgesamt zufriedenstellendes Ergebnis zu erreichen. Auch während des Aufenthalts des Metallstranges im Ofen kommt es zu weiteren Verzunderungen, so dass nach wie vor im Laufe der Zeit erhebliche Beschädigungen an den Transporteinrichtungen im Ofen zu beobachten sind. Dabei nehmen mit zunehmender Lauflänge des Metallstranges im Ofen auch die Verzunderung des Stranges und dadurch die Ablagerungen im Ofen zu, so dass insbesondere der, in Förderrichtung des Metallstranges betrachtet, hintere Ofenteil nach wie vor einer erheblichen Belastung durch Ablagerungen ausgesetzt ist. Der Effekt der erneuten Oxidation des Wärmgutes im Verlauf seiner Ofenreise, die zu den genannten Ablagerungen vor allem im hinteren Teil des Ofens führt, wird also bislang nicht beachtet.

Der Erfindung liegt daher die **Aufgabe** zugrunde, ein Verfahren und eine zugehörige Vorrichtung zum Herstellen von Metallbändern zu schaffen, mit der der genannte Nachteil vermieden werden kann und mit dem bzw. mit der sichergestellt werden kann, dass insbesondere im - in Förderrichtung des Metallbandes betrachtet - hinteren Bereich des Ofens Zunderablagerungen vermieden werden. Dadurch soll die Betrieb- und Lebensdauer der Vorrichtung erhöht werden.

Diese Aufgabe wird erfindungsgemäß dadurch gelöst, dass die Entzunderungsoperation im Ofen an einem sich bewegenden Ort im Ofen erfolgt.

Die Entzunderungseinrichtung, die im Ofenbereich vorgesehen ist, soll sich also relativ zum Ofen bewegen.

Hierunter ist weiter zu verstehen, dass innerhalb des Ofenbereichs selber eine Entzunderungsoperation stattfindet. Mit Vorteil erfolgt diese etwa in der Mitte des Bereichs des Ofens. Der Ofen erstreckt sich in Förderrichtung des Metallstranges über eine gewisse Länge. Das genannte Merkmal ist so zu verstehen, dass etwa auf halbem Wege des Metallstranges durch den Ofen die Entzunderungsoperation durchgeführt wird. Sie erfolgt bevorzugt im Bereich von 40 % bis 60 % der Längenerstreckung des Ofens.

Bevorzugt ist zusätzlich zu der Entzunderungsoperation im Bereich des Ofens eine Entzunderungsoperation in Förderrichtung des Metallstranges vor dem Ofen vorgesehen. Das bedeutet, dass der Metallstrang entzundert in den Ofen(bereich) eintritt und dann ein weiteres Mal innerhalb des Ofens bzw. Ofenbereichs entzundert wird.

Dadurch werden zunderbedingte Ablagerungen im Ofen und insbesondere an dessen Förderelementen vermieden bzw. soweit reduziert, dass die Lebens- bzw. Betriebsdauer des Ofens und seiner Komponenten erheblich verlängert werden kann.

Die Vorrichtung zum Herstellen von Metallbändern weist einen Ofen auf, in dem der Metallstrang auf eine gewünschte Temperatur gebracht und/oder auf einer gewünschten Temperatur gehalten werden kann, sowie eine in Förderrichtung des Metallstranges hinter dem Ofen angeordnete Walzstraße zum Walzen des Metallbandes, wobei im Ofen mindestens eine Entzunderungseinrichtung angeordnet ist. Die Vorrichtung ist erfindungsgemäß dadurch gekennzeichnet, dass die Entzunderungseinrichtung im Ofen mit Bewegungsmitteln in Verbindung steht, mit denen sie in Förderrichtung des Metallstranges verschieblich angeordnet ist.

Die Entzunderungseinrichtung ist dabei mit Vorteil etwa in der Mitte des Bereichs des Ofens angeordnet.

Es kann dabei vorgesehen werden, dass der Ofen durchgängig, also quasi einteilig, ausgebildet ist und die Entzunderungseinrichtung im Ofeninneren angeordnet ist.

Bevorzugt ist zusätzlich zu der Entzunderungseinrichtung im Bereich des Ofens eine Entzunderungseinrichtung vor dem Ofen angeordnet.

Es ist dabei vorgesehen, dass sie mit Bewegungsmitteln in Verbindung steht, mit denen sie in Förderrichtung des Metallstranges verschieblich angeordnet ist. Dann kann der Ort der Entzunderung im Ofenbereich verändert werden. Die Entzunderungseinrichtung kann dabei insbesondere über dem zu entzundernden Gut bewegt werden. Es kann vorgesehen werden, dass die Entzunderungseinrichtung aus der Linie herausgefahren werden kann.

Ferner ist es auch möglich, dass die Entzunderung innerhalb der Linie einem beweglichen Ofenteil zugeordnet ist. Zu beweglichen Ofenteilen beispielsweise in Form einer Fähre wird auf die DE 40 17 928 A1 hingewiesen.

Für die Entzunderung kommen übliche und an sich vorbekannte Systeme zum Einsatz. Dabei kann die Entzunderungseinrichtung vom Typ mit statischen Düsen oder mit rotierenden Düsen zum Einsatz kommen. Möglich ist es auch, dass beide Typen von Düsen in Kombination eingesetzt werden. Nähere Angaben zu diesen Düsenarten finden sich in der EP 0 625 383 B1.

Das zu entzundernde Gut kann dabei sowohl vorwärts (in Förderrichtung) als auch rückwärts (gegen Förderrichtung) durch die Entzunderungseinrichtung bzw. an dieser vorbei bewegt werden.

Durch den Erfindungsvorschlag wird erricht, dass die Lebensdauer der Ofenanlage und insbesondere deren Transportvorrichtung für den Metallstrang erheblich verlängert wird, da die Belastung durch Zunder erheblich reduziert ist.

Ferner ermöglicht die Erfindung auch eine höhere Flexibilität und Produktivität der Gesamtanlage durch die Reduktion von Wartungsarbeiten und eine Erhöhung der Brammenqualität.

In der Zeichnung sind Ausführungsbeispiele der Erfindung dargestellt.

Es zeigen:
- Fig. 1: schematisch eine einen Ofen aufweisende Vorrichtung zur Herstellung eines Metallbandes, und
- Fig. 2: schematisch den Bereich des Ofens in einer alternativen Ausgestaltung.

In den Figuren ist schematisch eine Vorrichtung 2 skizziert, die zur Erzeugung eines Metallstranges 1 in Form eines Stahlbandes oder eines Stahlblechs dient. Die Vorrichtung 2 weist eine nur sehr schematisch skizzierte Stranggießanlage 10 auf, mit der ein Dünnbrammenstrang hergestellt wird. Nicht näher dargestellt ist, dass die Stranggießanlage 10 aus einer Kokille besteht, der eine nachgeordnete Strangführung folgt, die mittels Biegerollen und Treibeinrichtungen den vertikal aus der Kokille austretenden Metallstrang 1 in die Horizontale umlenkt.

In Förderrichtung R hinter der Stranggießanlage 10 befindet sich ein Durchlaufofen 3, 3a, 3b, der sich über einen Bereich 5 erstreckt, d. h. in Förderrichtung R eine gewisse Längenausdehnung hat. Der Ofen wird zur Wiedererwärmung, zur Temperaturvergleichmäßigung und/oder zur Pufferung von Brammen oder Dünnbrammen benötigt.

Hinter dem Ofen 3, 3a, 3b befindet sich in bekannter Weise eine Walzstraße 4.

Eine entsprechend modifizierte Vorrichtung 2 kann auch zur Verarbeitung vorgewalzter Bleche oder Bänder zum Einsatz kommen.

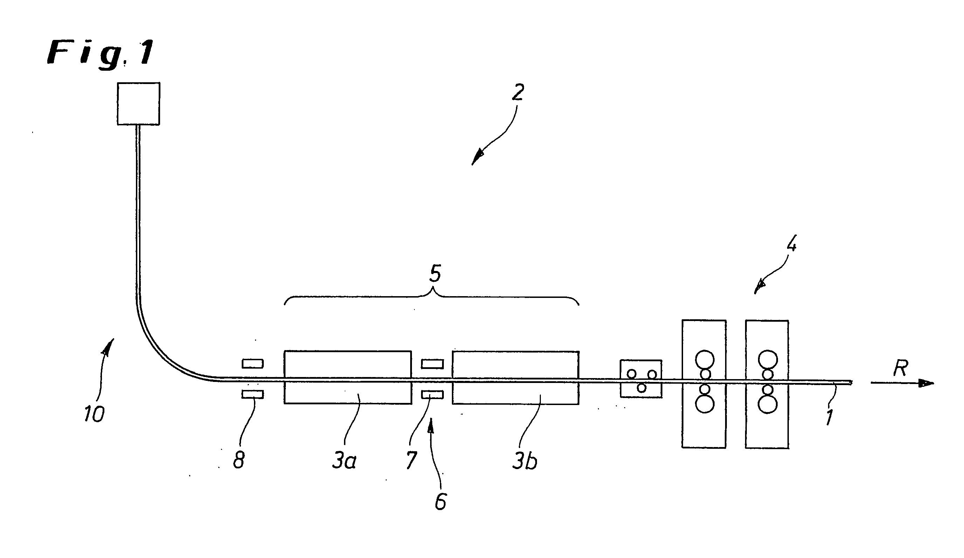

Wie in Fig. 1 zu sehen ist, besteht der Ofen hier aus zwei Teilen 3a und 3b, die sich über den Bereich 5 in Förderrichtung R erstrecken. Der Ofen weist also eine Unterbrechungsstelle auf. Die Unterbrechungsstelle befindet sich dabei etwa in der Mitte 6 des Bereichs 5. An dieser Stelle ich eine Entzunderungseinrichtung 7 angeordnet.

Diese Entzunderungseinrichtung arbeitet in bekannter Weise, z. B. durch Wassereinsatz, wobei statische angeordnete oder bewegliche (rotierende) Düsen zum Einsatz kommen können. Auch andere Arten von Entzunderungseinrichtungen können verwendet werden, z. B. solche, die mit Säureeinsatz arbeiten.

Der Prozess des Wiedererwärmens, der Temperaturvergleichmäßigung bzw. der Pufferung von Brammen oder Dünnbrammen ist also an der Stelle 6 kurzzeitig unterbrochen, um eine Zwischen-Entzunderung im Ofenbereich 5 vorzunehmen.

Vor dem Ofen 3, 3a, 3b ist eine weitere Entzunderungseinrichtung 8 angeordnet, die dafür sorgt, dass entzundertes, d. h. gereinigtes Material in den Ofen eintritt. Im Zusammenwirken mit der Entzunderungseinrichtung 7 bedeutet dies, dass über den gesamten Bereich 5 des Ofens kaum noch Verunreinigungen entstehen, die durch Verzunderungserscheinungen während der Ofenreise des Metallstranges 1 bedingt sind. Dadurch sind die Ablagerungen insbesondere an den Transportelementen im Ofen erheblich reduziert, was die Lebensdauer der Anlage wesentlich erhöht.

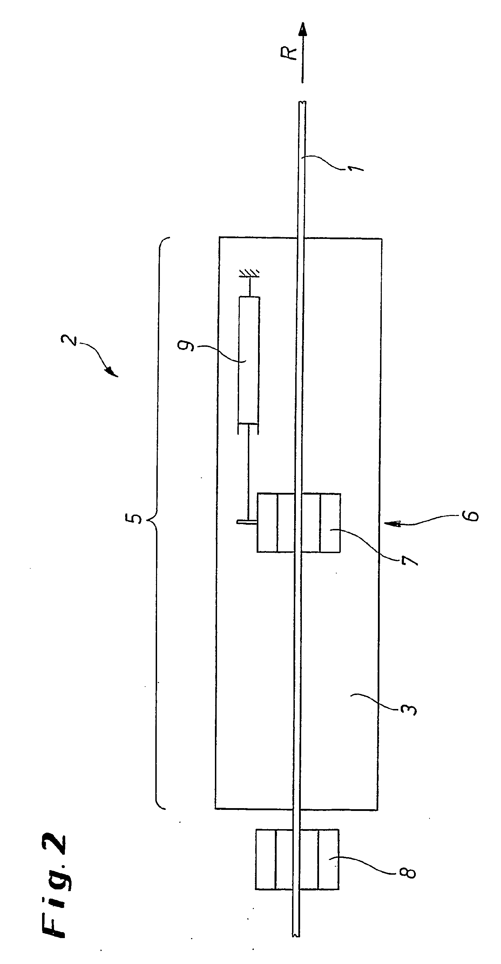

In Fig. 2 ist zu sehen, dass der Ofen 3 auch einteilig ausgebildet sein kann, d. h. er weist gemäß dieser Ausführungsform keine Unterbrechungsstelle auf. Die Entzunderungseinrichtung 7 ist hier im Ofeninneren angeordnet. Sie sorgt etwa in der Mitte der Ofenlänge - an der Position 6 - für eine Entzunderung des Metallstranges 1.

Hier ist ferner vorgesehen, dass die Entzunderungseinrichtung 7 im Ofen 3 beweglich ist. Hierzu ist die Entzunderungseinrichtung 7 mit nur schematisch angedeuteten Bewegungsmitteln 9 verbunden, die sie in Förderrichtung R bewegen können. Die Entzunderungseinrichtung 7 kann damit am optimalen Ort positioniert werden bzw. die Entzunderung kann bei verfahrender Entzunderungseinrichtung 7 erfolgen.

Gleichermaßen kann vorgesehen werden, dass die Entzunderungseinrichtung 7 an oder in einem beweglichen Ofenteil angeordnet ist. Hierbei handelt es sich zumeist um Fähren, die das Walzgut bewegen.

### Bezugszeichenliste:

- 1: Metallband
- 2: Vorrichtung zum Herstellen von Metallbändern
- 3: Ofen
- 3a: erster Ofenteil
- 3b: zweiter Ofenteil
- 4: Walzstraße
- 5: Bereich des Ofens
- 6: Mitte des Bereichs des Ofens
- 7: Entzunderungseinrichtung
- 8: Entzunderungseinrichtung
- 9: Bewegungsmittel
- 10: Stranggießanlage

- R: Förderrichtung

## Patentansprüche

1. Verfahren zum Herstellen von Metallbändern (1) in einer Vorrichtung (2), in der ein Metallstrang, insbesondere eine Dünnbramme, in einem Ofen (3, 3a, 3b) auf eine gewünschte Temperatur gebracht und/oder auf einer gewünschten Temperatur gehalten und in Förderrichtung (R) des Metallstranges (1) hinter dem Ofen (3, 3a, 3b) in einer Walzstraße (4) einem Walzprozess unterzogen wird, wobei der Metallstrang (1) während seines Aufenthalts im Ofen (3, 3a, 3b) mindestens einer Entzunderungsoperation unterzogen wird,
**dadurch gekennzeichnet,**
**dass** die Entzunderungsoperation im Ofen (3, 3a, 3b) an einem sich bewegenden Ort im Ofen (3, 3a, 3b) erfolgt.

2. Verfahren nach Anspruch 1,
**dadurch gekennzeichnet,**
**dass** eine Entzunderungsoperation etwa in der Mitte (6) des Bereichs (5) des Ofens (3, 3a, 3b) erfolgt.

3. Verfahren nach Anspruch 1 oder 2,
**dadurch gekennzeichnet,**
**dass** zusätzlich zu der Entzunderungsoperation im Bereich (5) des Ofens (3, 3a, 3b) eine Entzunderungsoperation in Förderrichtung (R) des Metallstranges (1) vor dem Ofen (3, 3a, 3b) erfolgt.

4. Vorrichtung (2) zum Herstellen von Metallbändern (1), die einen Ofen (3, 3a, 3b) aufweist, in dem ein Metallstrang, insbesondere eine Dünnbramme, auf eine gewünschte Temperatur gebracht und/oder auf einer gewünschten Temperatur gehalten werden kann, sowie eine in Förderrichtung (R) des Metallstranges (1) hinter dem Ofen (3, 3a, 3b) angeordnete Walzstraße (4) zum Walzen des Metallstranges (1), wobei im Ofen (3, 3a, 3b) mindestens eine Entzunderungseinrichtung (7) angeordnet ist,
**dadurch gekennzeichnet,**
**dass** die Entzunderungseinrichtung (7) im Ofen (3, 3a, 3b) mit Bewegungsmitteln (9) in Verbindung steht, mit denen sie in Förderrichtung (R) des Metallstranges (1) verschieblich angeordnet ist.

5. Vorrichtung nach Anspruch 4,
**dadurch gekennzeichnet,**
**dass** die Entzunderungseinrichtung (7) etwa in der Mitte (6) des Bereichs (5) des Ofens (3, 3a, 3b) angeordnet ist.

6. Vorrichtung nach Anspruch 4 oder 5,
**dadurch gekennzeichnet,**
**dass** der Ofen (3) durchgängig ausgebildet ist und die Entzunderungseinrichtung (7) im Ofeninneren angeordnet ist.

7. Vorrichtung nach einem der Ansprüche 4 bis 6,
**dadurch gekennzeichnet,**
**dass** zusätzlich zu der Entzunderungseinrichtung (7) im Bereich (5) des Ofens (3, 3a, 3b) eine Entzunderungseinrichtung (8) in Förderrichtung (R) des Metallstranges (1) vor dem Ofen (3, 3a, 3b) angeordnet ist.

8. Vorrichtung nach einem der Ansprüche 4 bis 7,
**dadurch gekennzeichnet,**
**dass** die mindestens eine Entzunderungseinrichtung (7, 8) vom Typ mit statischen Düsen ist.

9. Vorrichtung nach einem der Ansprüche 4 bis 7,
**dadurch gekennzeichnet,**
**dass** die mindestens eine Entzunderungseinrichtung (7, 8) vom Typ mit rotierenden Düsen ist.

## Claims

1. Method of producing metal strips (1) in a device (2), in which a metal strand, particularly a thin slab, is brought to a desired temperature and/or kept to a desired temperature in an oven (3, 3a, 3b) and behind the oven (3, 3a, 3b) in the conveying direction (R) of the metal strand (1) is subjected to a rolling process in a rolling train (4), wherein the metal strand (1) during its stay in the oven (3, 3a, 3b) is subjected to at least one descaling operation, **characterised in that** the descaling operation in the oven (3, 3a, 3b) is carried out at a moving location in the oven (3, 3a, 3b).

2. Method according to claim 1, **characterised in that** a descaling operation is carried out approximately in the centre (6) of the region (5) of the oven (3, 3a, 3b).

3. Method according to claim 1 or 2, **characterised in that** in addition to the descaling operation in the region (5) of the oven (3, 3a, 3b) a descaling operation is carried out in front of the oven (3, 3a, 3b) in the conveying direction (R) of the metal strand (1).

4. Device (2) for producing metal strips (1), which comprises an oven (3, 3a, 3b) in which a metal strand, particularly a thin slab, can be brought to a desired temperature and/or held at a desired temperature, as well as a rolling train (4), which is arranged behind the oven (3, 3a, 3b) in the conveying direction (R) of the metal strand (1), for rolling the metal strand (1), wherein at least one descaling device (7) is arranged in the oven (3, 3a, 3b), **characterised in that** the descaling device (7) in the oven (3, 3a, 3b) is connected with movement means (9) by which it is arranged to be displaceable in the conveying direction (R) of the metal strand (1).

5. Device according to claim 4, **characterised in that** the descaling device (7) is arranged approximately in the centre (6) of the region (5) of the oven (3, 3a, 3b).

6. Device according to claim 4 or 5, **characterised in that** the oven (3) is constructed for running through and the descaling device (7) is arranged in the oven interior.

7. Device according any one of claims 4 to 6, **characterised in that** in addition to the descaling device (7) in the region (5) of the oven (3, 3a, 3b) a descaling device (8) is arranged in front of the oven (3, 3a, 3b) in the conveying direction (R) of the metal strand (1).

8. Device according to any one of claims 4 to 7, **characterised in** the at least one descaling device (7, 8) is of the type with static nozzles.

9. Device according to any one of claims 4 to 7, **characterised in that** at least one descaling device (7, 8) is of the type with rotating nozzles.

## Revendications

1. Procédé pour produire des bandes de métal (1) dans un appareil (2), dans lequel une tige de métal, en particulier une brame mince, est amenée dans un four (3, 3a, 3b) à une température souhaitée et/ou maintenue à une température souhaitée, et soumise dans un train de laminoir (4), derrière le four (3, 3a, 3b) en direction de convoyage (R) de la tige de métal (1), à un processus de laminage dans lequel la tige de métal (1) est soumise pendant son séjour dans le four (3, 3a, 3b) à au moins une opération de décalaminage,
**caractérisé en ce que** l'opération de décalaminage a lieu dans le four (3, 3a, 3b) à un emplacement qui se déplace dans le four.

2. Procédé selon la revendication 1,
**caractérisé en ce qu'**une opération de décalaminage a lieu approximativement au milieu (6) de la région (5) du four (3, 3a, 3b).

3. Procédé selon la revendication 1 ou 2,
**caractérisé en ce que,** en supplément à l'opération de décalaminage dans la région (5) du four (3, 3a, 3b), une opération de décalaminage a lieu avant le four (3, 3a, 3b) en direction de convoyage (R) de la tige de métal (1).

4. Appareil pour produire des bandes de métal (1), qui comprend un four (3, 3a, 3b) dans lequel une tige de métal, en particulier une brame mince, est amenée à une température souhaitée et/ou maintenue à une température souhaitée, ainsi qu'un train de laminoir (4), agencé derrière le four (3, 3a, 3b) en direction de convoyage (R) de la tige de métal (1), pour laminer la tige de métal (1), et dans lequel au moins un système de décalaminage (7) est agencé dans le four (3, 3a, 3b),
**caractérisé en ce que** le système de décalaminage (7) dans le four (3, 3a, 3b) est associé à des moyens de déplacement (9), au moyen desquels il est agencé mobile en direction de convoyage (R) de la tige de métal (1).

5. Appareil selon la revendication 4,
**caractérisé en ce que** le système de décalaminage (7) est agencé approximativement au milieu (6) de la région (5) du four (3, 3a, 3b).

6. Appareil selon la revendication 4 ou 5,
**caractérisé en ce que** le four (3) est réalisé continu, et **en ce que** le système de décalaminage (7) est agencé à l'intérieur du four.

7. Appareil selon l'une des revendications 4 à 6,
**caractérisé en ce que,** en supplément au système de décalaminage (7) dans la région (5) du four (3, 3a, 3b), un système de décalaminage (8) est agencé avant le four (3, 3a, 3b) en direction de convoyage (R) de la tige de métal (1).

8. Appareil selon l'une des revendications 4 à 7,
**caractérisé en ce que** ledit au moins un système de décalaminage (7, 8) est du type avec buses statiques.

9. Appareil selon l'une des revendications 4 à 7,
**caractérisé en ce que** ledit au moins un système de décalaminage (7, 8) est du type avec buses en rotation.
